# EUROPEAN PATENT APPLICATION

(11) **EP 4 578 723 A1**
(43) Date of publication of application: **02.07.2025**
(21) Application number: 24216546.2
(22) Date of filing: 29.11.2024
(51) Int. Cl.: B60L 53/80, B60L 58/12, B60L 3/12, B60L 50/60, B60L 53/30, B60L 53/66, B60L 58/16, B60S 5/06, G06Q 50/06, B60K 1/04, H01M 50/244, H01M 50/249, B60L 3/00

(54) **BATTERY SWAP SYSTEM, BATTERY SWAP APPARATUS, AND BATTERY SELECTION METHOD**

(30) Priority: 08.12.2023 JP 2023207657
(71) Applicant: TOYOTA JIDOSHA KABUSHIKI KAISHA, Aichi-ken, 471-8571 (JP)
(72) Inventor: ICHIKAWA, Shinji, Toyota-shi, 471-8571 (JP)
(74) Representative: TBK

(57) **Abstract**

A battery swap system (1) includes: an electrified vehicle (200) equipped with a first battery (201); and a battery swap apparatus (100) including at least one replacement battery (101) and configured to swap out the first battery (201) for a second battery (101). The electrified vehicle (200) sends battery installation information and electrical requirement information to outside, the battery installation information being a battery installation position and a battery placement direction in the electrified vehicle (200), and the electrical requirement information being an electrical characteristic required of the second battery (101). The battery swap apparatus (100) includes a processor (11) configured to select a candidate for the second battery (101) from the at least one replacement battery (101) by using the battery installation information and the electrical requirement information and battery information of the at least one replacement battery (101).

## Description

### BACKGROUND OF THE INVENTION

### 1. Field of the Invention

The present disclosure relates to a battery swap system, a battery swap apparatus, and a battery selection method.

### 2. Description of Related Art

For example, Japanese Unexamined Patent Application Publication No. 2014-003803 (JP 2014-003803 A) discloses a battery swap system that allows more efficient and convenient battery swapping by requesting battery information from a battery swap station located on a travel route based on the remaining capacity of a battery installed in an electrified vehicle and making an appointment for battery swapping in advance.

The battery swap system disclosed in JP 2014-003803 A selects a battery by considering the type of battery that can be installed in the electrified vehicle. Spare batteries stored in a battery swap station (battery swap apparatus) are limited, and their specifications and characteristics vary.

Users have a wide range of needs for a battery according to the driving range of an electrified vehicle, the output and capacity of a battery, etc. Therefore, if a battery is selected based only on whether it can be installed in the electrified vehicle, a battery that cannot realize the ability that the user wants from the electrified vehicle may be selected.

### SUMMARY OF THE INVENTION

The present disclosure provides a battery swap system, battery swap apparatus, and battery selection method that reduce the possibility that a battery not suitable for a target vehicle may be used for swapping.

According to one aspect of the present disclosure, a battery swap system includes: an electrified vehicle equipped with a first battery; and a battery swap apparatus including at least one replacement battery and configured to swap out the first battery for a second battery. The electrified vehicle is configured to send battery installation information and electrical requirement information to outside, the battery installation information being either or both of a battery installation position and a battery placement direction in the electrified vehicle, and the electrical requirement information being an electrical characteristic required of the second battery. The battery swap apparatus includes a processor configured to select at least one candidate for the second battery from the at least one replacement battery by using the battery installation information and the electrical requirement information that are received from the outside and battery information of the at least one replacement battery.

With the above configuration, the battery swap apparatus selects the second battery from the at least one replacement battery by using the battery installation information, the electrical requirement information, and the battery information. The second battery suitable for the vehicle can thus be selected based on the battery installation information and the electrical requirement information. As a result, the possibility is reduced that a battery not suitable for the vehicle may be used for swapping.

The electrical requirement information may include at least one of information on a voltage, information on output power, information on input power, and information on a remaining capacity which are require of the second batter. The processor may be configured to give a higher priority to the battery installation information and the information on the voltage than to the information on the output power, the information on the input power, and the information on the remaining capacity. The processor may be configured to select the at least one candidate for the second battery from the at least one replacement battery by giving a higher priority to the battery installation information than to the information on the voltage.

The processor may be configured to make a priority of the information on the output power and a priority of the information on the input power equal to each other.

The battery installation information is related to whether the second battery can be installed in the vehicle. The information on the voltage required of the second battery is related to whether the vehicle can be driven. The information on the output power required of the second battery is related to the driving force of the vehicle. The information on the input power required of the second battery is related to the charging time of the battery installed in the vehicle. The information on the remaining capacity required of the second battery is related to the driving range of the vehicle. With this configuration, the pieces of information can be prioritized in order of how much they are required of the second battery.

The battery swap apparatus may be configured to send information of the candidate for the second battery which is selected and information of cost for swapping for the candidate for the second battery to the outside.

With this configuration, the electrified vehicle can easily acquire the information regarding the second battery and the information regarding the cost for swapping for the second battery from the outside.

According to another aspect of the present disclosure, a battery swap apparatus includes at least one replacement battery, and is configured to swap out a first battery installed in an electrified vehicle for a second battery. The battery swap apparatus includes: a communication unit configured to receive battery installation information and electrical requirement information from outside, the battery installation information being either or both of a battery installation position and a battery placement direction in the electrified vehicle, and the electrical requirement information being an electrical characteristic required of the second battery; and a processor configured to select at least one candidate for the second battery from the at least one replacement battery by using the battery installation information and the electrical requirement information that are received and battery information of the at least one replacement battery included in the battery swap apparatus.

With the above configuration, the processor selects the second battery from the at least one replacement battery by using the battery installation information, the electrical requirement information, and the battery information. The second battery suitable for the vehicle can thus be selected based on the battery installation information and the electrical requirement information. As a result, the possibility is reduced that a battery not suitable for the vehicle may be used for swapping.

The electrical requirement information may include at least one of information on a voltage, information on output power, information on input power, and information on a remaining capacity which are required of the second battery. The processor may be configured to give a higher priority to the battery installation information and the information on the voltage than to the information on the output power, the information on the input power, and the information on the remaining capacity. The processor may be configured to select the at least one candidate for the second battery from the at least one replacement battery by giving a higher priority to the battery installation information than to the information on the voltage.

The processor may be configured to make a priority of the information on the output power and a priority of the information on the input power equal to each other.

With this configuration, the battery swap apparatus can be provided that can select the second battery by prioritizing the pieces of information in order of how much they are required of the second battery.

The communication unit may be configured to send information of the candidate for the second battery which is selected and information of cost for swapping for the candidate for the second battery to the outside.

With this configuration, the electrified vehicle can easily acquire the information regarding the second battery together with the information regarding the cost for swapping from the outside.

According to still another aspect of the present disclosure, a battery selection method for selecting, by a battery swap apparatus configured to swap out a first battery installed in an electrified vehicle for a second battery, at least one candidate for the second battery from at least one replacement battery included in the battery swap apparatus. The battery selection method includes: receiving, by the battery swap apparatus, battery installation information and electrical requirement information from outside, the battery installation information being either or both of a battery installation position and a battery placement direction in the electrified vehicle, and the electrical requirement information being an electrical characteristic required of the second battery; and selecting, by the battery swap apparatus, the at least one candidate for the second battery from the at least one replacement battery included in the battery swap apparatus by using the battery installation information and the electrical requirement information that are received and battery information of the at least one replacement battery.

With the above configuration, the second battery is selected from the at least one replacement battery by using the battery installation information, the electrical requirement information, and the battery information. The battery selection method can thus be provided that reduces the possibility that a battery not suitable for a target vehicle may be used for swapping. As a result, the possibility is reduced that a battery not suitable for a target vehicle may be used for swapping.

The present disclosure reduces the possibility that a battery not suitable for a target vehicle may be used for swapping.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows the configuration of a battery swap system according to an embodiment;
FIG. 2 is a sequence diagram showing control of the battery swap system according to the embodiment;
FIG. 3 is a sequence diagram showing the control of the battery swap system according to the embodiment;
FIG. 4 is a flowchart showing a detailed process of step S70 in FIG. 2; and
FIG. 5 is a flowchart showing a detailed process of step S73 in FIG. 4 according to a modification of the embodiment.

### DETAILED DESCRIPTION OF EMBODIMENTS

An embodiment of the present disclosure will be described in detail below with reference to the drawings. The same or corresponding parts are denoted by the same signs throughout the drawings, and description thereof will not be repeated.

### Configuration of Battery Swap System

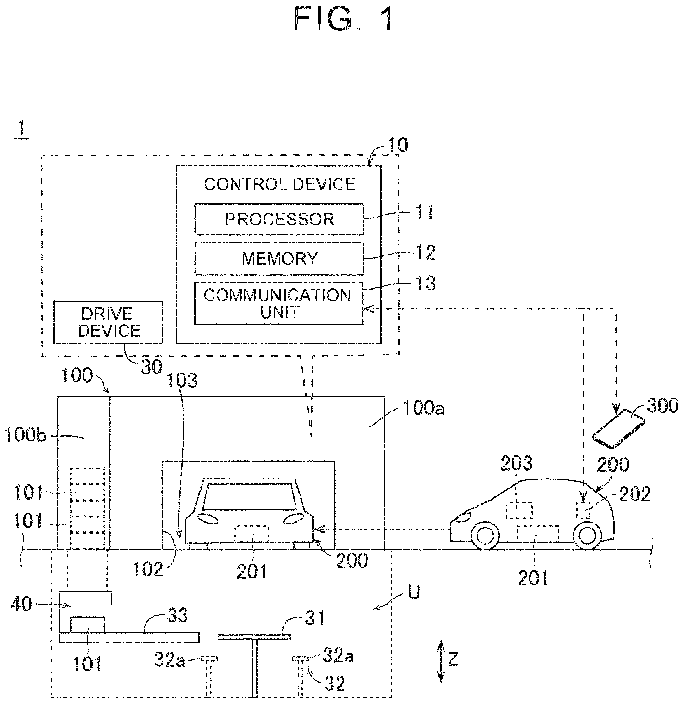

FIG. 1 shows a battery swap system including a battery swap apparatus according to an embodiment. The Z direction in the figure indicates the direction in which a battery table 31, which will be described later, moves.

Referring to FIG. 1, a battery swap system 1 includes a battery swap apparatus 100 and an electrified vehicle 200. The electrified vehicle 200 includes a battery 201, a communication device 202, and an electronic control unit (ECU) 203. The electrified vehicle 200 is, for example, a plug-in hybrid electric vehicle (PHEV), a battery electric vehicle (BEV), or a fuel cell electric vehicle (FCEV). The battery 201 is an example of the "first battery" of the present disclosure.

The battery 201 stores electric power to be used to drive the electrified vehicle 200. The communication device 202 is configured to communicate with a communication device located outside the electrified vehicle 200. The communication device 202 includes, for example, a Data Communication Module (DCM). The ECU 203 controls various systems in the electrified vehicle 200.

The battery swap apparatus 100 includes a battery swap apparatus body 100a where battery swapping is performed, and a storage 100b where at least one battery 101 is stored. The battery swap apparatus body 100a is an apparatus that performs battery swapping, namely swaps out the battery 201 installed in the electrified vehicle 200 for the battery 101. The storage 100b is annexed to the battery swap apparatus body 100a. The battery swap apparatus 100 (battery swap apparatus body 100a) has an entrance and exit 102 through which the electrified vehicle 200 enters and exits the battery swap apparatus 100 (battery swap apparatus body 100a). The battery 101 is an example of the "at least one replacement battery" and the "second battery" of the present disclosure.

The battery 101 stored in the storage 100b is moved to a temporary storage area 40 in an underfloor area U, and is then transported to the electrified vehicle 200. A drive device 30 is provided in the underfloor area U.

The battery swap apparatus 100 (battery swap apparatus body 100a) includes a control device 10 and the drive device 30. The drive device 30 includes the battery table 31, a lifting unit 32, and a transport unit 33.

The control device 10 includes a processor 11, a memory 12, and a communication unit 13. The memory 12 stores programs to be executed by the processor 11 and information to be used in the programs (e.g., maps, mathematical expressions, and various parameters). The memory 12 further records battery information that is information regarding the battery shape, battery placement direction, voltage, output power, and capacity (remaining capacity) of each battery 101. The information regarding the battery placement direction of each battery 101 includes position information of a connector of the battery that is to be connected to the electrified vehicle 200. The processor 11 controls the drive device 30.

The communication unit 13 includes various communication interfaces (I/Fs). The processor 11 controls the communication unit 13. The communication unit 13 communicates with the communication device 202 of the electrified vehicle 200 etc. Bidirectional communication is possible between the communication unit 13 and the electrified vehicle 200 (communication device 202). The communication unit 13 can also communicate with a mobile terminal 300 owned by a user of the electrified vehicle 200. The present embodiment illustrates an example in which various types of information are transferred between the communication device 202 of the electrified vehicle 200 and the communication unit 13 of the battery swap apparatus 100. The communication unit 13 is an example of the "communication unit" of the present disclosure.

A vehicle stop area 103 is provided in the battery swap apparatus 100. When the user instructs to start battery swap work by operating a navigation system, not shown, of the electrified vehicle 200 with the electrified vehicle 200 stopped in the vehicle stop area 103, the communication unit 13 receives an instruction signal to start battery swap work from the electrified vehicle 200. The processor 11 starts controlling the drive device 30 for the battery swap work in response to the communication unit 13 receiving the instruction signal.

The lifting unit 32 lifts and lowers the electrified vehicle 200 by moving up and down the electrified vehicle 200 while holding it from below. The lifting unit 32 includes a pair of lifting bars 32a. The electrified vehicle 200 is supported from below by the lifting bars 32a. Battery swapping (battery removal and installation) is performed with the electrified vehicle 200 held horizontally by the lifting bars 32a.

The battery table 31 is configured to move up and down in the Z direction. The battery table 31 is moved up to a position as high as the bottom of the electrified vehicle 200, and the battery 201 removed from the electrified vehicle 200 is placed on the battery table 31. The battery table 31 with the battery 101 placed thereon is moved up to the position as high as the bottom of the electrified vehicle 200, and the battery 101 is installed in the electrified vehicle 200.

The transport unit 33 is configured to transport the batteries 101, 201. Specifically, the transport unit 33 transports the battery 201 removed from the electrified vehicle 200 and placed on the battery table 31 to the temporary storage area 40. The transport unit 33 also transports the battery 101 transported from the storage 100b to the temporary storage area 40 to the battery table 31.

In the conventional system, information such as the type of battery installed in an electrified vehicle is sent from the electrified vehicle to a battery swap apparatus. Therefore, the battery swap apparatus is considered to select a replacement battery based on the type of battery etc. There is room for further improvement in terms of reducing the possibility that a battery not suitable for a target electrified vehicle may be selected for swapping.

In the present embodiment, the processor 11 of the battery swap apparatus 100 selects a battery 101 that is compatible with the electrified vehicle 200 by using battery installation information, electrical requirement information, and battery information on each battery 101 that is available in the battery swap apparatus 100. These pieces of information will be described later. Selection of the battery 101 will be described in detail below.

### Battery Swapping Method (Battery Selection Method)

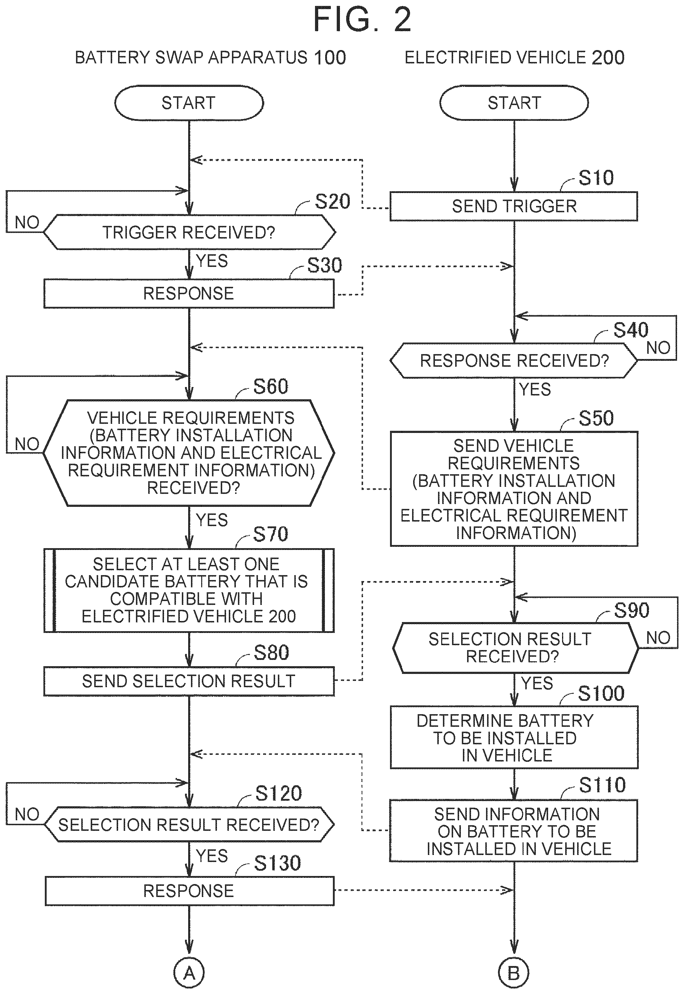

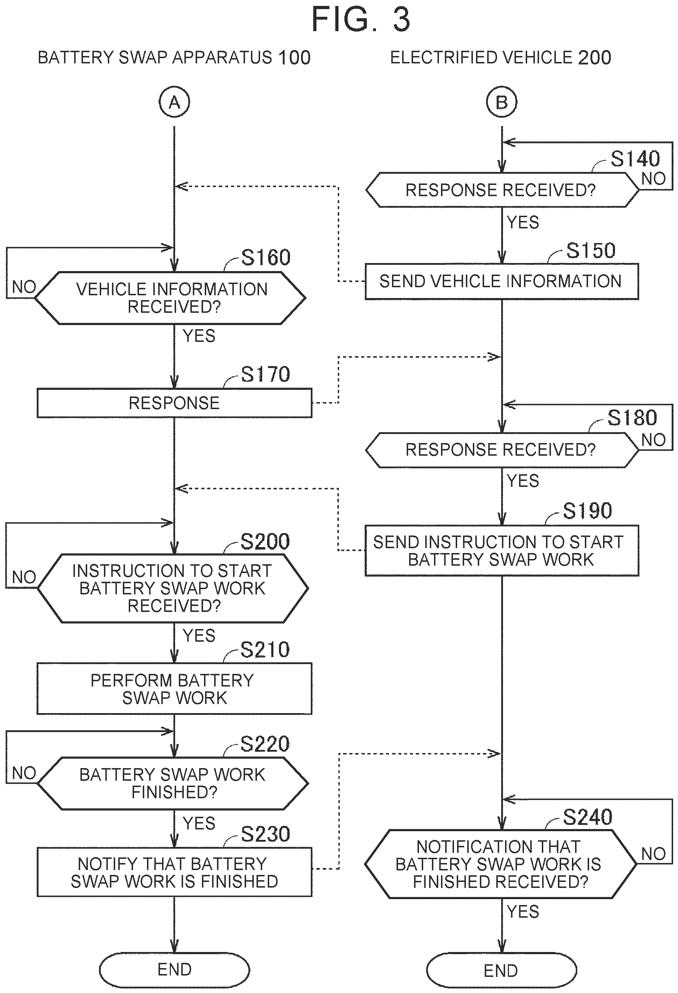

A battery swap method that is performed by the battery swap system 1 (battery selection method that is performed by the battery swap apparatus 100) will be described with reference to the sequence diagrams of FIGS. 2 and 3. In the sequence shown in FIGS. 2 and 3, the ECU 203 performs control of the electrified vehicle 200, and the processor 11 performs control of the battery swap apparatus 100.

In step S10, the electrified vehicle 200 sends a trigger signal for starting battery swapping to the battery swap apparatus 100 via the communication device 202.

In step S20, the battery swap apparatus 100 determines whether the trigger signal in step S10 has been received. When the trigger signal has been received (Yes in S20), the process proceeds to step S30. When the trigger signal has not been received (No in S20), step S20 is repeated.

In step S30, the battery swap apparatus 100 sends a response to the trigger signal from the electrified vehicle 200 (signal acknowledging receipt of the trigger signal) to the electrified vehicle 200 via the communication unit 13.

In step S40, the electrified vehicle 200 determines whether the response in step S30 has been received. When the response in step S30 has been received (Yes in S40), the process proceeds to step S50. When the response in step S30 has not been received (No in S40), step S40 is repeated.

In step S50, the electrified vehicle 200 sends vehicle requirements to the battery swap apparatus 100 via the communication device 202. The vehicle requirements are requirements from the electrified vehicle 200 for a battery to be used for swapping in the battery swap apparatus 100. Specifically, the vehicle requirements include battery installation information and electrical requirement information.

The battery installation information includes information regarding the battery installation position and battery placement direction in the electrified vehicle 200. The information regarding the battery installation position includes information on the area where the battery is disposed in the electrified vehicle 200 (including information on size and shape of the area), and information on the relative position of the area with respect to the vehicle body. The information regarding the battery placement direction includes position information of a connector that is connected to the battery in the electrified vehicle 200.

The electrical requirement information includes information on the voltage (upper limit value, lower limit value, and rated value) required by the electrified vehicle 200. These various voltage values are values required based on the specifications of the electrified vehicle 200.

The electrical requirement information further includes information on the output power (rated output) required of the battery 101. The information on the output power may further include maximum output. The output power may be a predetermined value based on the specifications of the electrified vehicle 200, or may be a value that varies based on, for example, the travel history and travel plan (destination and planned travel route) of the electrified vehicle 200.

The electrical requirement information further includes information on the remaining capacity (state of charge (SOC)) required of the battery 101 (lower limit value of the remaining capacity etc.). The remaining capacity may be a predetermined value, or may be a value that varies based on, for example, the travel history and travel plan (destination and planned travel route) of the electrified vehicle 200.

In step S60, the battery swap apparatus 100 determines whether the vehicle requirements in step S50 have been received. When the vehicle requirements have been received (Yes in S60), the process proceeds to step S70. When the vehicle requirements have not been received (No in S60), step S60 is repeated.

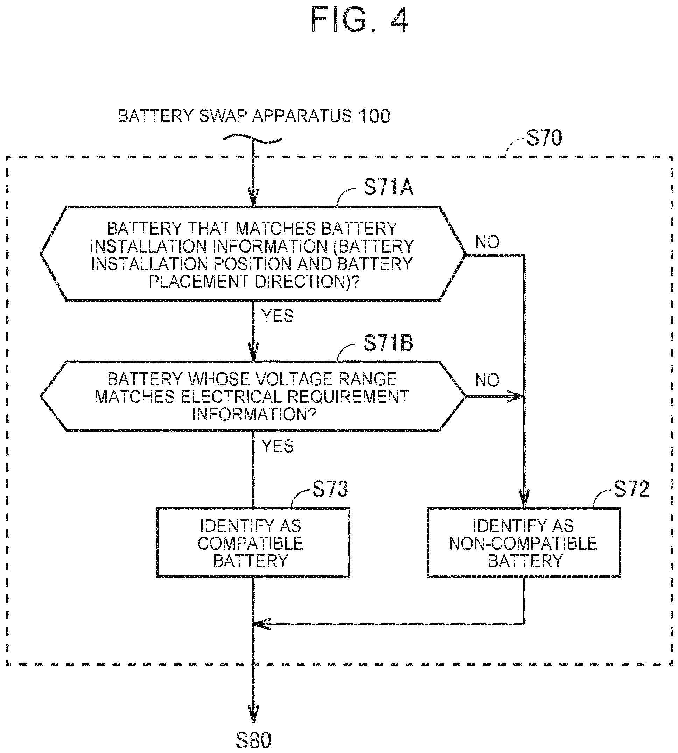

In step S70, the battery swap apparatus 100 selects a candidate battery(ies) 101 that is (are) compatible with the electrified vehicle 200. Specifically, the battery swap apparatus 100 compares the information on the battery installation position, the information on the battery placement direction, and the information on the voltage, which are the pieces of information included in the vehicle requirements received from the electrified vehicle 200, with the corresponding pieces of information included in the battery information of each battery 101. The battery swap apparatus 100 then selects at least one candidate battery that is compatible with the electrified vehicle 200 from the batteries 101 that are available in the battery swap apparatus 100. Step S70 will be described in detail later with reference to FIG. 4.

In step S80, the battery swap apparatus 100 sends the selection result in step S70 to the electrified vehicle 200 via the communication unit 13. The selection result that is sent from the battery swap apparatus 100 includes a list of candidate batteries 101 that are compatible with the electrified vehicle 200, and the battery information of each candidate battery 101.

In step S90, the electrified vehicle 200 determines whether the selection result in step S80 has been received. When the selection result has been received (Yes in S90), the process proceeds to step S100. When the selection result has not been received (No in S90), step S90 is repeated.

In step S100, the electrified vehicle 200 determines a battery to be installed in the electrified vehicle 200 from the selection result received in step S90. Specifically, a battery to be installed in the electrified vehicle 200 is determined as follows. The electrified vehicle 200 displays the received selection result (at least one candidate battery that is compatible with the electrified vehicle 200) on a human-machine interface (HMI), not shown, mounted on the electrified vehicle 200, and the user selects a battery to be installed in the electrified vehicle 200 from the at least one displayed candidate battery. When the selection result received in step S90 includes information on only one battery 101, the electrified vehicle 200 may determine this battery 101 to be a battery to be installed in the electrified vehicle 200.

In step S 110, the electrified vehicle 200 sends information on the battery to be installed in the electrified vehicle 200 as determined in step S100 to the battery swap apparatus 100 via the communication device 202.

In step S120, the battery swap apparatus 100 determines whether the selection result in step S 110 has been received. When the selection result has been received (Yes in S120), the process proceeds to step S130. When the selection result has not been received (No in S120), step S120 is repeated.

In step S130, the battery swap apparatus 100 sends a response to the selection result in step S110 (signal acknowledging receipt of the selection result) to the electrified vehicle 200 via the communication unit 13.

Referring to FIG. 3, in step S140, the electrified vehicle 200 determines whether the response in step 5130 (FIG. 2) has been received. When the response has been received (Yes in S140), the process proceeds to step S150. When the response has not been received (No in S140), step S140 is repeated.

In step S150, the electrified vehicle 200 sends individual vehicle information on the electrified vehicle 200 (hereinafter referred to as "vehicle information") to the battery swap apparatus 100 via the communication device 202. The vehicle information includes information unique to the electrified vehicle 200 (personal information such as vehicle identification number (VIN)) or license plate number).

In step S160, the battery swap apparatus 100 determines whether the vehicle information in step S150 has been received. When the vehicle information has been received (Yes in S 160), the process proceeds to step S 170. When the vehicle information has not been received (No in S160), step S160 is repeated.

In step S170, the battery swap apparatus 100 sends a response to the vehicle information in step S150 (signal acknowledging receipt of the vehicle information) to the electrified vehicle 200 via the communication unit 13.

In step S180, the electrified vehicle 200 determines whether the response in step S 170 has been received. When the response has been received (Yes in S 180), the process proceeds to step S190. When the response has not been received (No in S180), step S180 is repeated.

In step S190, the electrified vehicle 200 sends an instruction to start battery swap work to the battery swap apparatus 100 via the communication device 202.

In step S200, the battery swap apparatus 100 determines whether the instruction in step S200 has been received. When the instruction has been received (Yes in S200), the process proceeds to step S210. When the instruction has not been received (No in S200), step S200 is repeated.

In step S210, the battery swap apparatus 100 performs the work of swapping out the battery 201 of the electrified vehicle 200 for the battery 101 selected in step S 100 as a battery to be installed in the electrified vehicle 200.

In step S220, the battery swap apparatus 100 determines whether the battery swap work is finished. When the battery swap work is finished (Yes in S220), the process proceeds to step S230. When the battery swap work is not finished (No in step S220), step S220 is repeated.

In step S230, the battery swap apparatus 100 notifies the electrified vehicle 200 via the communication unit 13 that the battery swap work is finished.

In step S240, the electrified vehicle 200 determines whether the notification in step S230 has been received. When the notification has been received (Yes in S240), the process ends. When the notification has not been received (No in S240), step S240 is repeated.

FIG. 4 shows a detailed process flow of step S70 in FIG. 2. Step S70 includes steps S71A to S73. The battery swap apparatus 100 selects a battery 101 that is compatible with the electrified vehicle 200 from the batteries 101 available in the battery swap apparatus 100. Steps S71A to S73 are performed for all the batteries 101 available in the battery swap apparatus 100. This will be described in detail below.

In step S71A, the battery swap apparatus 100 determines whether each battery 101 matches the battery installation information (battery installation position and battery placement direction) received from the electrified vehicle 200 (whether each battery 101 is compatible with the electrified vehicle 200).

More specifically, the battery swap apparatus 100 compares the information regarding the battery installation position and battery placement direction received from the electrified vehicle 200 with the information regarding the battery installation position and battery placement direction included in the battery information of each battery 101. The battery swap apparatus 100 then determines any battery 101 that matches both the battery installation position and battery placement direction received from the electrified vehicle 200 to be a battery that matches the battery installation information (battery installation position and battery placement direction) received from the electrified vehicle 200.

For the battery 101 that matches the battery installation information (Yes in step S71A), the process proceeds to step S71B. For the battery 101 that does not match the battery installation information (No in step S71A), the process proceeds to step S72.

In step S71B, the battery swap apparatus 100 determines whether each battery 101 matches the electrical requirement information (upper and lower limit values of the voltage) received from the electrified vehicle 200 (whether each battery 101 is compatible with the electrified vehicle 200).

More specifically, the battery swap apparatus 100 compares the information regarding the upper and lower limit values of the voltage required by the electrified vehicle 200, which is the information included in the electrical requirement information received from the electrified vehicle 200, with the information regarding the voltage of each battery 101 included in the battery information of each battery 101. The battery swap apparatus 100 then determines any battery 101 that falls within the voltage range specified by the electrical requirement information (upper and lower limit values of the voltage) received from the electrified vehicle 200 to be a battery that matches the electrical requirement information received from the electrified vehicle 200.

For the battery 101 that matches the electrical requirement information (Yes in step S71B), the process proceeds to step S73. For the battery 101 that does not match the electrical requirement information (No in step S71B), the process proceeds to step S72.

In step S72, the battery swap apparatus 100 identifies each battery 101 that does not satisfy the condition in step S71A or the condition in step S71B as a battery that does not meet the vehicle requirements (battery installation information and electrical requirement information) from the electrified vehicle 200.

In step S73, the battery swap apparatus 100 identifies each battery 101 that satisfies both the condition in step S71A and the condition in step S71B as a battery that meets the vehicle requirements from the electrified vehicle 200.

When all of the batteries 101 are identified as batteries that do not meet the vehicle requirements in step S70, the battery swap apparatus 100 may notify the electrified vehicle 200 of the selection result that no battery 101 is compatible with the electrified vehicle 200 in step S80 of FIG. 2.

As described above, in the present embodiment, the battery swap apparatus 100 selects a battery 101 that meets the vehicle requirements, by using the battery installation information regarding the battery installation position and battery placement direction in the electrified vehicle 200, the electrical requirement information regarding the electrical characteristics required of the battery 101, and the battery information regarding each battery 101 available in the battery swap apparatus 100. This reduces the possibility that a battery 101 whose battery installation position and battery placement direction are not compatible with the electrified vehicle 200 may be selected, and also reduces the possibility that a battery 101 whose electrical characteristics are not compatible with the electrified vehicle 200 may be selected. As a result, it is possible to select a battery 101 that is more suitable for the electrified vehicle 200 (and the user's intended use) compared to the case where a battery 101 is selected based only on the type of battery.

The above embodiment illustrates an example in which the information that the battery swap apparatus 100 sends in step S80 of FIG. 2 includes a list of candidate batteries 101 that are compatible with the electrified vehicle 200, and the battery information on each candidate battery 101. However, the present disclosure is not limited to this. The information that the battery swap apparatus 100 sends in step S80 may further include information regarding the cost for swapping for the battery 101 that is compatible with the electrified vehicle 200. With this configuration, the electrified vehicle 200 can easily acquire the information regarding the cost for swapping of the battery 201 from the outside, so that the battery 101 that is not suitable for the electrified vehicle 200 is less likely to be used for swapping.

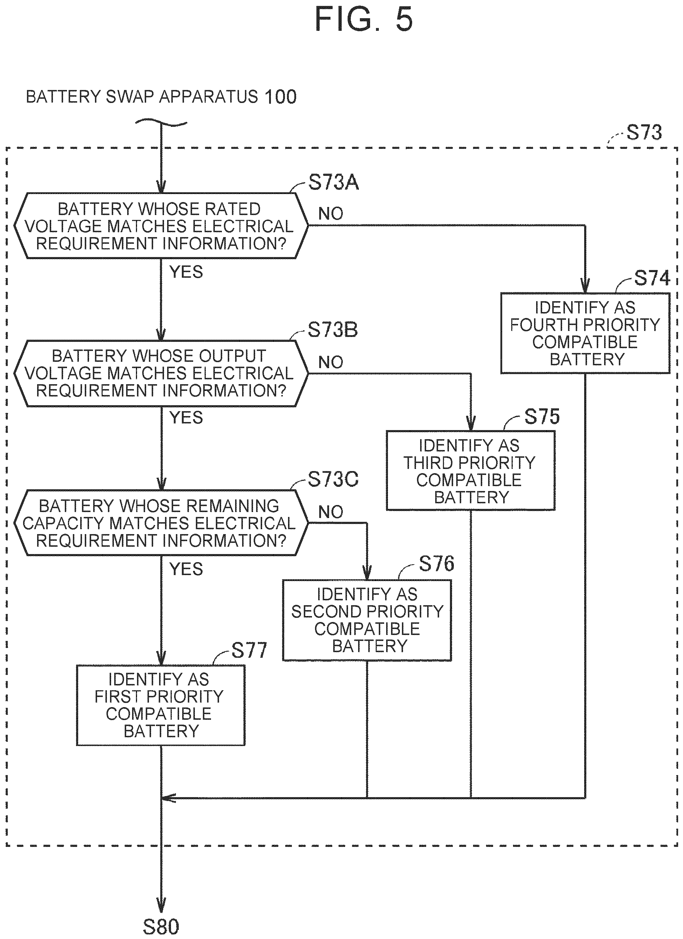

The above embodiment illustrates an example in which the battery swap apparatus 100 selects at least one candidate battery that is compatible with the electrified vehicle 200 from the batteries 101 available in the battery swap apparatus 100 by determining whether each battery 101 available in the battery swap apparatus 100 meets the vehicle requirements (battery installation position, battery placement direction, and upper and lower limits of the voltage) from the electrified vehicle 200. However, the present disclosure is not limited to this. For example, the battery swap apparatus 100 (processor 11) may identify a battery 101 that is compatible with the electrified vehicle 200 out of the batteries 101 available in the battery swap apparatus 100 by using the information on the voltage, information on the output power, and information on the capacity (remaining capacity) that are included in the electrical requirement information of the vehicle requirements from the electrified vehicle 200. Alternatively, the pieces of information included in the electrical requirement information may be prioritized. This will be described in detail with reference to FIG. 5.

FIG. 5 shows an example of the process that is performed in step S73 of FIG. 4. Step S73 includes steps S73A to S77. The battery swap apparatus 100 prioritize the pieces of information included in the electrical requirement information, and identifies any battery 101 that is compatible with the electrified vehicle 200 from the batteries 101 available in the battery swap apparatus 100. This will be described in detail below.

In step S73A, the battery swap apparatus 100 determines whether each battery 101 matches the electrical requirement information (rated voltage) received from the electrified vehicle 200.

More specifically, the battery swap apparatus 100 compares the information regarding the voltage (rated voltage) of the electrified vehicle 200, which is the information included in the electrical requirement information received from the electrified vehicle 200, with the information regarding the voltage of each battery 101 included in the battery information of each battery 101. When the voltage of any battery 101 matches the voltage (rated voltage) required by the electrified vehicle 200, the battery swap apparatus 100 determines this battery 101 to be a battery that matches the electrical requirement information (rated voltage).

For the battery 101 that matches the electrical requirement information (Yes in step S73A), the process proceeds to step S73B. For the battery 101 that does not match the electrical requirement information (No in step S73A), the process proceeds to step S74.

In step S73B, the battery swap apparatus 100 determines whether each battery 101 matches the electrical requirement information (output power) received from the electrified vehicle 200.

More specifically, the battery swap apparatus 100 compares the information regarding the output power (rated output) required of the battery 101, which is the information included in the electrical requirement information received from the electrified vehicle 200, with the information regarding the output power of each battery 101 included in the battery information of each battery 101. The battery swap apparatus 100 then determines any battery 101 whose output power is equal to or higher than the output power (rated output) required of the battery 101 to be a battery that matches the electrical requirement information (rated output).

For the battery 101 that matches the electrical requirement information (Yes in step S73B), the process proceeds to step S73C. For the battery 101 that does not match the electrical requirement information (No in step S73B), the process proceeds to step S75.

In step S73C, the battery swap apparatus 100 determines whether each battery 101 meets the requirement in the electrical requirement information (remaining capacity).

More specifically, the battery swap apparatus 100 compares the information regarding the lower limit value of the remaining capacity required of the battery 101, which is the information included in the electrical requirement information received from the electrified vehicle 200, with the information regarding the remaining capacity of each battery 101 included in the battery information of each battery 101. The battery swap apparatus 100 then determines any battery 101 whose remaining capacity is higher than the lower limit of the remaining capacity required of the battery 101 to be a battery that matches the electrical requirement information (remaining capacity).

For the battery 101 that matches the electrical requirement information (Yes in step S73C), the process proceeds to step S77. For the battery 101 that does not match the electrical requirement information (No in step S73C), the process proceeds to step S76.

In step S77, the battery swap apparatus 100 identifies each battery 101 that satisfies the conditions in steps S73A, S73B, and S73C as a first priority battery that is compatible with the electrified vehicle 200.

In step S76, the battery swap apparatus 100 identifies each battery 101 that satisfies the conditions in steps S73A, S73B and does not satisfy the condition in step S73C as a second priority battery that is compatible with the electrified vehicle 200.

In step S75, the battery swap apparatus 100 identifies each battery 101 that satisfies the condition in step S73A and does not satisfy the condition in step S73B as a third priority battery that is compatible with the electrified vehicle 200.

In step S74, the battery swap apparatus 100 identifies each battery 101 that does not satisfy the condition in step S73A as a fourth priority battery that is compatible with the electrified vehicle 200.

In step S80 of FIG. 2, the battery swap apparatus 100 may send only the information on the first priority batteries 101 to the electrified vehicle 200. The battery swap apparatus 100 may send only the information on one of the first priority batteries 101 (e.g., the first priority battery 101 with the largest remaining capacity or the first priority battery 101 with the highest state of health (SOH)) to the electrified vehicle 200. When there is no first priority battery 101, information on the batteries 101 with the next highest priority (e.g., the second priority) is sent to the electrified vehicle 200. The battery swap apparatus 100 may send information on all of the batteries 101 determined to be compatible with the electrified vehicle 200 to the electrified vehicle 200 together with their priority information.

The above embodiment illustrates an example in which the priority of the output power of the battery 101 is higher than the priority of the remaining capacity of the battery 101. However, the present disclosure is not limited to this. The priority of the remaining capacity of the battery 101 may be higher than the priority of the output power of the battery 101. Which information is given a higher priority may be set in advance in the electrified vehicle 200, or may be set as desired by the user. Alternatively, which information is given a higher priority may be automatically determined by the ECU 203 based on travel information (travel history and travel plan) of the electrified vehicle 200.

The above embodiment illustrates an example in which whether the battery 101 meets the vehicle requirements is determined in order of the battery installation information and the voltage range. However, the present disclosure is not limited to this. Whether the battery 101 meets the vehicle requirements may be determined in an order other than the order in this example. For example, whether the battery 101 meets the vehicle requirements may first be determined regarding the voltage range, and then regarding the battery installation information.

The above example illustrates an example in which the battery swap apparatus 100 prioritizes the information on the vehicle requirements and selects any battery 101 that is compatible with the electrified vehicle 200. However, the present disclosure is not limited to this. For example, only those batteries 101 that meet all of the vehicle requirements may be determined to be batteries 101 that are compatible with the electrified vehicle 200. Specifically, meeting all of the vehicle requirements means satisfying all of the conditions in steps S71A, S71B in FIG. 4 and the conditions in steps S73A, S73B, and S73C in FIG. 5.

The above embodiment illustrates an example in which the electrified vehicle 200 and the battery swap apparatus 100 communicate directly with each other. However, the present disclosure is not limited to this. For example, the electrified vehicle 200 and the battery swap apparatus 100 may communicate indirectly with each other via an external server.

The above embodiment illustrates an example in which the battery(ies) 101 is (are) stored in the battery swap apparatus 100. However, the present disclosure is not limited to this. The battery(ies) 101 to be used for swapping may be stored outside the battery swap apparatus 100.

The above embodiment illustrates an example in which batteries 101 are selected based on the battery installation position and the battery placement direction. However, the present disclosure is not limited to this. Batteries 101 may be selected based on either the battery installation position or the battery placement direction. In other words, either the battery installation position or the battery placement direction may not be considered when selecting batteries 101.

In the above embodiment, the electrical requirement information includes the information on the output power required of the battery 101. However, the present disclosure is not limited to this. The electrical requirement information may further include information on the input power (rated input) required of the battery 101. The information on the input power may further include information regarding maximum input power. The input power may be a predetermined value based on the specifications of the electrified vehicle 200, or may be a value that varies based on, for example, the travel history and travel plan (destination and planned travel route) of the electrified vehicle 200.

In the flowchart of FIG. 5, the battery swap apparatus 100 may determine whether each battery 101 meets the requirement in the information on the input power (rated input). More specifically, the battery swap apparatus 100 compares the information regarding the input power (rated input) required of the battery 101, which is the information included in the electrical requirement information received from the electrified vehicle 200, with the information regarding the input power of each battery 101 included in the battery information of each battery 101. The battery swap apparatus 100 then determines a battery 101 whose input power is equal to or higher than the input power (rated input) required of the battery 101 to be a battery that matches the electrical requirement information (rated input).

In the compatible battery identification flow shown in FIG. 5, the information on the input power may be given a higher priority than both the information on the output voltage and the information on the remaining capacity, or than either the information on the output voltage or the information on the remaining capacity. Alternatively, the information on the input power may be given a lower priority than both the information on the output voltage and the information on the remaining capacity. Which information is given a higher priority may be set in advance in the electrified vehicle 200, or may be set as desired by the user. Alternatively, which information is given a higher priority may be automatically determined by the ECU 203 based on travel information (travel history and travel plan) of the electrified vehicle 200.

In the above embodiment, the batteries 101 identified as compatible batteries in step S73 of FIG. 4 are prioritized according to the flowchart of FIG. 5. However, the present disclosure is not limited to this. For example, when the battery swap apparatus 100 determines whether each battery 101 identified as a compatible battery in step S73 of FIG. 4 matches the electrical requirement information, scores may be given to each battery 101 according to whether the battery 101 matches the electrical requirement information, and the batteries 101 may be prioritized according to their total scores. Whether each battery 101 matches the electrical requirement information is determined regarding each of the pieces of information included in the electrical requirement information, namely information on the voltage, information on the output power, information on the input power, and information on the remaining capacity.

How scores are given to the batteries 101 will be described in detail below. The battery swap apparatus 100 compares the information regarding the voltage (rated voltage) of the electrified vehicle 200 included in the electrical requirement information with the information regarding the voltage of each battery 101 included in the battery information of each battery 101. When the voltage of any battery 101 matches the rated voltage required by the electrified vehicle 200, the battery swap apparatus 100 determines this battery 101 to be a battery 101 that matches the electrical requirement information, and gives a score to this battery 101. Similarly, whether each battery 101 matches the electrical requirement information is also determined regarding each of the information on the output power, the information on the input power, and the information on the remaining capacity, and when the battery 101 matches the electrical requirement information, a score is given to the battery 101. After the determination regarding all the pieces of information is completed, the battery swap apparatus 100 compares the total scores of the batteries 101 and prioritizes the batteries 101 according to their total scores.

The pieces of information can be prioritized by setting the scores for the pieces of information to different values. For example, when the information on the voltage is given a higher priority than the information on the output power, the score that is given to the battery 101 when the battery 101 is determined to match the electrical requirement information regarding the information on the voltage is higher than the score that is given to the battery 101 when the battery 101 is determined to match the electrical requirement information regarding the information on the output power.

The pieces of information can be given the same priority by setting the scores for the pieces of information to the same value. For example, when the information on the output power and the information on the input power have the same priority, the score that is given to the battery 101 when the battery 101 is determined to match the electrical requirement information regarding the information on the output power is the same as the score that is given to the battery 101 when the battery 101 is determined to match the electrical requirement information regarding the information on the input power.

The embodiment disclosed herein is illustrative in all respects and not restrictive. The technical scope of the present disclosure is shown by the claims rather than by the above description of the embodiment, and is intended to include all modifications within the scope equivalent to those of the claims.

## Claims

1. A battery swap system (1), comprising:
an electrified vehicle (200) equipped with a first battery (201); and
a battery swap apparatus (100) including at least one replacement battery (101) and configured to swap out the first battery (201) for a second battery (101), wherein:
the electrified vehicle (200) is configured to send battery installation information and electrical requirement information to outside, the battery installation information being either or both of a battery installation position and a battery placement direction in the electrified vehicle (200), and the electrical requirement information being an electrical characteristic required of the second battery (101); and
the battery swap apparatus (100) includes a processor (11) configured to select at least one candidate for the second battery (101) from the at least one replacement battery (101) by using the battery installation information and the electrical requirement information that are received from the outside and battery information of the at least one replacement battery (101).

2. The battery swap system (1) according to claim 1,
wherein the electrical requirement information includes at least one of information on a voltage, information on output power, information on input power, and information on a remaining capacity which are require of the second battery (101),
wherein the processor (11) is configured to give a higher priority to the battery installation information and the information on the voltage than to the information on the output power, the information on the input power, and the information on the remaining capacity, and
wherein the processor (11) is configured to select the at least one candidate for the second battery (101) from the at least one replacement battery (101) by giving a higher priority to the battery installation information than to the information on the voltage.

3. The battery swap system (1) according to claim 2, wherein the processor (11) is configured to make a priority of the information on the output power and a priority of the information on the input power equal to each other.

4. The battery swap system (1) according to any one of claims 1 to 3, wherein the battery swap apparatus (100) is configured to send information of the candidate for the second battery (101) which is selected and information of cost for swapping for the candidate for the second battery (101) to the outside.

5. A battery swap apparatus (100) including at least one replacement battery (101) and configured to swap out a first battery (201) installed in an electrified vehicle (200) for a second battery (101), the battery swap apparatus (100) comprising:
a communication unit (13) configured to receive battery installation information and electrical requirement information from outside, the battery installation information being either or both of a battery installation position and a battery placement direction in the electrified vehicle (200), and the electrical requirement information being an electrical characteristic required of the second battery (101); and
a processor (11) configured to select at least one candidate for the second battery (101) from the at least one replacement battery (101) by using the battery installation information and the electrical requirement information that are received and battery information of the at least one replacement battery (101) included in the battery swap apparatus (100).

6. The battery swap apparatus (100) according to claim 5,
wherein the electrical requirement information includes at least one of information on a voltage, information on output power, information on input power, and information on a remaining capacity which are required of the second battery (101),
wherein the processor (11) is configured to give a higher priority to the battery installation information and the information on the voltage than to the information on the output power, the information on the input power, and the information on the remaining capacity, and
wherein the processor (11) is configured to select the at least one candidate for the second battery (101) from the at least one replacement battery (101) by giving a higher priority to the battery installation information than to the information on the voltage.

7. The battery swap apparatus (100) according to claim 6, wherein the processor (11) is configured to make a priority of the information on the output power and a priority of the information on the input power equal to each other.

8. The battery swap apparatus (100) according to any one of claims 5 to 7, wherein the communication unit (13) is configured to send information of the candidate for the second battery (101) which is selected and information of cost for swapping for the candidate for the second battery (101) to the outside.

9. A battery selection method for selecting, by a battery swap apparatus (100) configured to swap out a first battery (201) installed in an electrified vehicle (200) for a second battery (101), at least one candidate for the second battery (101) from at least one replacement battery (101) included in the battery swap apparatus (100), the battery selection method comprising:
receiving, by the battery swap apparatus (100), battery installation information and electrical requirement information from outside, the battery installation information being either or both of a battery installation position and a battery placement direction in the electrified vehicle (200), and the electrical requirement information being an electrical characteristic required of the second battery (101); and
selecting, by the battery swap apparatus (100), the at least one candidate for the second battery (101) from the at least one replacement battery (101) included in the battery swap apparatus (100) by using the battery installation information and the electrical requirement information that are received and battery information of the at least one replacement battery (101).
